(19) **Europäisches Patentamt**
**European Patent Office**
**Office européen des brevets**

(11) **EP 2 204 775 B1**

(12) **FASCICULE DE BREVET EUROPEEN**

(45) Date de publication et mention
de la délivrance du brevet:
**05.10.2011 Bulletin 2011/40**

(51) Int Cl.:
***G06T 17/20*** *(2006.01)*

(21) Numéro de dépôt: **09180766.9**

(22) Date de dépôt: **24.12.2009**

(54) **Triangulation incrementale de polygone pour affichage numerique**

Inkrementelle Triangulierung von Polygonen für eine digitale Anzeige

Incremental polygon triangulation for digital display

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **31.12.2008 FR 0859169**

(43) Date de publication de la demande:
**07.07.2010 Bulletin 2010/27**

(73) Titulaire: **Newscape Technology**
**22300 Lannion (FR)**

(72) Inventeurs:
• **Klaine, Luc**
**22300, LANNION (FR)**
• **Saunier, Anthony**
**22300, LANNION (FR)**

(74) Mandataire: **Cabinet Plasseraud et al**
**52, rue de la Victoire**
**75440 Paris Cedex 09 (FR)**

(56) Documents cités:
• **KUMAR S: "Robust incremental polygon triangulation for surface rendering" 8TH INTERNATIONAL CONFERENCE IN CENTRAL EUROPE ON COMPUTER GRAPHICS, VISUALIZATION AND INTERACTIVE DIGITAL MEDIA'2000. UNDER THE AUSPICES OF THE LORD MAYOR OF THE CITY OF PILSEN IN COOPERATION WITH EUROGRAPHOCS AND IFIP WG 5.10. WSCG'2000. CONFERENCE, vol. 2, 2000, pages 381-388 VOL.2, XP007909497 ISBN: 80-7082-612-6**
• **LAMOT M ET AL: "An overview of triangulation algorithms for simple polygons" INFORMATION VISUALIZATION, 1999. PROCEEDINGS. 1999 IEEE INTERNATIONAL CONFERENCE ON LONDON, UK 14-16 JULY 1999, LOS ALAMITOS, CA, USA,IEEE COMPUT. SOC, US, 14 juillet 1999 (1999-07-14), pages 153-158, XP010345972 ISBN: 978-0-7695-0210-6**

**Description**

La présente invention se rapporte au domaine de la triangulation conforme d'un polygone, en vue d'un affichage numérique sur un écran d'un terminal.

L'invention est plus particulièrement adaptée aux applications embarquées, par exemple de cartographie numérique, sur des terminaux mobiles, par exemple des téléphones portables, assistant personnel numérique ou PDA etc. De telles applications sont par exemple mises en oeuvre dans des terminaux mobiles aptes à communiquer avec un serveur.

On connait un traitement de données d'image décrit dans le document Kumars: "Robust incremental polygon triangulation for surface rendering", WSCG' 2000, vol.2, p. 381-388.

Il est connu d'effectuer une triangulation d'un polygone quelconque de façon à obtenir des triangles conformes, c'est-à-dire qui ne se recouvrent pas. Ainsi, un polygone de N points ordonnés est triangulable en (N-2) triangles conformes, sans intersection des arêtes hormis aux sommets du polygone.

De tels triangles conformes sont relativement faciles à afficher, par exemple en utilisant une carte graphique. Cet affichage relativement aisé peut être particulièrement intéressant dans le cas de terminaux relativement pauvres en ressources mémoire et/ou de calcul, du type téléphone portable.

Toutefois, il est possible que des points soient ajoutés ou supprimés d'un polygone alors que ce polygone est déjà triangulé, et éventuellement affiché. Par exemple, les points correspondant à un certain niveau de détail peuvent être transmis d'un serveur au terminal seulement si l'utilisateur du terminal le souhaite, par exemple pour un zoom.

Avec les procédés de triangulation conformes connus, il est nécessaire d'ajouter ou supprimer les points concernés à ou d'une liste ordonnée de points correspondant au polygone déjà triangulé, puis d'effectuer une nouvelle triangulation à partir de l'ensemble des points de cette liste de points ainsi actualisée.

Ainsi, pour un point ajouté à un polygone d'un millier de points environ, il est nécessaire d'effectuer une nouvelle triangulation sur un millier de points environ.

L'invention a pour objectif de permettre d'actualiser de façon plus rapide la triangulation et l'affichage d'un polygone précédemment triangulé.

Selon un premier aspect, l'invention a pour objet un procédé de triangulation conforme, en vue d'un affichage numérique sur un écran d'un terminal, comprenant

a/ recevoir un identifiant d'un point à ajouter/supprimer d'une liste ordonnée de points correspondant à un polygone ayant fait l'objet d'une triangulation conforme précédente,

b/ déterminer en fonction de l'identifiant reçu et d'une liste de triangles conformes obtenue par la triangulation précédente, une sous-liste ordonnée de points de la liste ordonnée, cette sous-liste correspondant à une portion du polygone,

c/ ajouter/supprimer le point à ajouter/supprimer à/de la sous-liste,

d/ effectuer une triangulation conforme du polygone correspondant à la sous-liste obtenue à l'étape c/, et

e/ actualiser la liste de triangles conformes obtenue par la triangulation précédente, en fonction des résultats de la triangulation de l'étape d/, en vue d'un affichage sur l'écran des triangles de la liste actualisée.

Ainsi, plutôt que d'effectuer une nouvelle triangulation de l'ensemble du polygone, on détermine une portion de polygone concernée par l'ajout/la suppression de point, et la triangulation est effectuée seulement sur cette portion de polygone, en tenant compte du point à ajouter ou supprimer. La triangulation du reste du polygone peut ainsi être conservée. Un tel procédé de triangulation incrémentale/décrémentale peut permettre d'éviter des calculs fastidieux, en particulier lorsque le nombre de points du polygone est élevé.

La sous-liste ordonnée peut comprendre deux points ou davantage, Par exemple lorsque le point donné est à ajouter au polygone et que ce point donné n'appartient à aucun des triangles de la triangulation précédente (point extérieur au polygone), la sous-liste ordonnée comprend seulement deux points de la liste ordonnée. La sous-liste correspond alors à un coté du polygone précédemment triangulé. A l'étape c/, le point donné est ajouté à cette sous-liste, et la triangulation de l'étape d/ conduit à un seul triangle ayant pour sommets les trois points de la sous-liste.

Par exemple, lorsque le point donné est à supprimer de la liste, et que le triangle formé par ce point donné et les points précédent et suivant ce point donné dans la liste ordonnée est l'un des triangles conformes obtenu par la triangulation précédente, la sous-liste ordonnée comprend seulement ces trois points. La sous-liste correspond alors à l'un des triangles du polygone précédemment triangulé. A l'étape c/, le point donné est supprimé de la sous-liste, et la triangulation de l'étape d/ est triviale.

Le procédé décrit ci-dessus est applicable à un polygone non croisé, ce qui n'est pas préjudiciable dans la mesure où un polygone croisé est décomposable en plusieurs polygones non-croisés.

Ce procédé peut trouver une application dans le cadre d'une approche multi-résolution. Un serveur peut par exemple conserver les points d'un polygone dans une mémoire structurée par niveaux de détails : les points correspondant à un niveau de détail élevé sont conservés ensemble, tandis que ceux correspondant à un niveau de détail plus faible sont stockés ailleurs.

Le classement des points par niveau de détail peut être effectué en utilisant par exemple le procédé décrit dans la demande WO2008003687. Par exemple, pour chaque point de polygone, on calcule une aire entre ce point, le point précédent et le point suivant dans la liste ordonnée correspondant au polygone. La valeur de cette aire fournit une indication du niveau de détail de ce point.

Lorsqu'un utilisateur souhaite visualiser sur son terminal un objet correspondant à un polygone avec un niveau de détail donné, le serveur envoie au terminal une liste ordonnée de points avec seulement les points correspondant à ce niveau de détail et aux niveaux de détails plus faibles. Une triangulation est effectuée et les triangles conformes obtenus sont affichés à l'écran.

Si l'utilisateur souhaite visualiser cet objet avec plus de détails, par exemple lors d'un zoom, le serveur envoie au terminal des coordonnées des points correspondant au niveau de détail souhaité, ainsi que des indications d'ordre de ces points au sein de la liste ordonnée précédemment transmise. Le procédé de triangulation incrémentale décrit ci-dessus peut alors être mis en oeuvre pour chaque point rajouté, de façon à éviter une re-triangulation complète du polygone.

Si l'utilisateur souhaite visualiser cet objet avec moins de détails, par exemple lors d'un de-zoom, le serveur envoie au terminal les identifiants des points de la liste précédemment transmise qui correspondraient à des points à éliminer. Le procédé de triangulation décrémentale décrit ci-dessus peut alors être mis en oeuvre pour chaque point soustrait, de façon à éviter une re-triangulation complète du polygone.

De façon générale, deux modes de réalisation sont envisagés, le premier consistant à ajouter un point au polygone déjà triangulé (triangulation incrémentale), le second à supprimer un point du polygone déjà triangulé (triangulation décrémentale).

Dans le premier mode de réalisation, l'identifiant du point reçu comprend des coordonnées de ce point et une indication d'ordre dudit point. Le procédé comprend :

- ajouter ce point reçu à la liste ordonnée de points correspondant au polygone précédemment triangulé, à un rang donné par l'indication d'ordre reçue,
- à l'étape b/, déterminer si le point reçu est situé à l'extérieur du polygone précédemment triangulé,

le cas échéant, à l'étape e/, ajouter à la liste de triangles correspondant à la triangulation précédente le triangle formé par le point reçu et les deux points de la liste ordonnée adjacents audit point reçu, sinon déterminer lors de l'étape b/ un jeu d'au moins un triangle de la liste de triangles correspondant à la triangulation précédente, ce jeu étant constitué de tous les triangles de cette liste au moins en partie recouverts par le triangle formé par le point reçu et les deux points de la liste ordonnée adjacents audit point reçu, et choisir en tant que points de la sous-liste ordonnée les points correspondants à ce jeu.

On peut ainsi déterminer la portion du polygone à re-trianguler en cas d'ajout d'un point.

Pour déterminer si le point reçu est situé à l'extérieur du polygone précédemment triangulé, on prévoir d'utiliser une indication reçue avec les coordonnées de ce point. Par exemple, est reçue avec les coordonnées d'un point à ajouter une variable sur un bit, dont la valeur indique si ce point est à l'extérieur du polygone correspondant aux niveaux de détails moindres que le niveau de détail du point reçu.

Alternativement, aucune indication n'est envoyée et on détermine si le point reçu est situé à l'extérieur du polygone d'une autre façon. Par exemple on détermine :

- le signe de l'aire du triangle formé par le point précédent le point reçu dans la liste ordonnée de points, le point reçu et le point suivant le point reçu dans cette liste,
- le signe de l'aire du triangle de la liste de triangles conforme comportant ces points précédent et suivant.

Si ces signes sont différents, alors on considère que le point reçu est situé à l'extérieur du polygone. Ce procédé est relativement peu coûteux en temps de calcul.

L'invention n'est pas non plus limitée par la façon dont peut être déterminé le jeu de triangles lorsque le point reçu est situé à l'intérieur du polygone précédemment triangulé. Par exemple, si le point reçu est dans le triangle de la liste de triangle comprenant les deux points de la liste ordonnée adjacents au point reçu, on choisit les sommets de ce triangle en tant que points de la sous-liste de points. Sinon, on sélectionne les sommets du triangle de la liste de triangles comprenant lesdits deux points de la liste ordonnée en tant que points de la sous-liste, puis pour un triangle courant étant initialement ce triangle de la liste de triangles qui comporte ces deux points de la liste ordonnée, on effectue les étapes suivantes :

b1/ choisir un triangle voisin du triangle courant partageant avec ce triangle courant une arête visible depuis le point reçu,

b2/ sélectionner les sommets du triangle voisin en tant que points de la sous-liste,

b3/ si le point reçu est extérieur au triangle voisin, répéter les étapes b1/, b2/ et b3/ en considérant le triangle voisin comme triangle courant, et ce jusqu'à trouver le triangle voisin auquel appartient le point reçu.

À l'étape b1/, pour choisir le triangle voisin du triangle courant partageant avec lui une arête visible depuis le point reçu, on peut par exemple se baser sur des comparaisons de signes d'aires de triangles signées, ce qui permet d'effectuer ce choix de façon relativement rapide et peu coûteuse en temps de calcul.

L'invention n'est pas limitée par la façon dont sont sélectionnés les points de la sous-liste ordonnée de points. Par exemple, à l'étape b2/, on peut écrire en mémoire des identifiants des sommets des triangles voisins, et l'ensemble de sommets obtenu lorsque le triangle voisin auquel appartient le point reçu est trouvé, constitue, après un ré-ordonnancement éventuel, la sous-liste ordonnée de points. Alternativement, à l'étape b2/, on peut se contenter d'écrire en mémoire l'identifiant du triangle voisin ; puis, lorsque le triangle voisin auquel appartient le point reçu est trouvé, on détermine facilement les points de la sous-liste de points à partir de l'ensemble des triangles ainsi obtenus.

Dans un second mode de réalisation, on reçoit un identifiant d'un point de la liste ordonnée de points correspondant au polygone précédemment triangulé, c'est à dire un identifiant d'un point à supprimer.

Avantageusement, en cas de suppression d'un point, la sous-liste ordonnée de points est constituée par tous les points des triangles ayant le point à supprimer comme sommet.

Par exemple, si le point à supprimer est associé à un seul triangle, à l'étape e/, on supprime ce triangle de la liste de triangles. Le point supprimé est en quelques sortes extérieur au polygone réactualisé.

Si le point à supprimer est associé à plusieurs triangles, à l'étape b/, on détermine un jeu d'au moins un triangle de la triangulation précédente, ce jeu étant constitué de tous les triangles ayant pour sommet le point reçu, et on choisit en tant que points de la sous-liste ordonnée les points correspondants à ce jeu.

Egalement, on réactualise la liste ordonnée de points en supprimant le point reçu de cette liste ordonnée de points.

Les points peuvent avoir des coordonnées bidimensionnelles ou tridimensionnelles. Dans le cas de coordonnées tridimensionnelles, le procédé est appliqué dans le plan du polygone à re-trianguler.

Avantageusement et de façon non limitative, on peut prévoir de conserver pour chaque arête du polygone précédemment triangulé un identifiant du triangle (parmi les triangles de liste de triangles conformes obtenue par la triangulation précédente) qui comporte cette arête. Une telle liste de triangles d'arêtes peut permettre de déterminer plus rapidement la sous-liste ordonnée de points.

En effet, en cas d'ajout d'un point, on peut retrouver facilement, à partir d'un point reçu et de la liste ordonnée de points, l'arête correspondant aux points précédent et suivant le point reçu dans la liste ordonnée. La liste de triangles d'arêtes permet alors de retrouver facilement le triangle correspondant à cette arête, évitant par là de parcourir chaque triangle de la liste de triangles conforme.

En cas de suppression d'un point, on peut retrouver facilement, à partir d'un point reçu et de la liste ordonnée de points, les deux arêtes correspondant aux points précédent et suivant le point reçu dans la liste ordonnée. La liste de triangles d'arêtes permet alors de retrouver facilement le ou les triangle(s) correspondant à ces arêtes, évitant par là de parcourir chaque triangle de la liste de triangles conforme.

Avantageusement, on peut prévoir de conserver pour chaque triangle de la liste des triangles les identifiants des éventuels triangles voisins.

En cas d'ajout d'un point, ceci peut permettre de faciliter la détermination du jeu de triangles au moins en partie recouverts par le triangle formé par le point reçu et les deux points de la liste ordonnée adjacents à ce point reçu. Alternativement, il est bien entendu possible de parcourir tous les triangles de la liste de triangles et de déterminer pour chacun de ces triangles si ce triangle est voisin d'un triangle courant.

En cas de suppression d'un point, ceci peut permettre de sélectionner facilement les triangles voisins comprenant le point à supprimer, sans avoir à parcourir la liste de triangles pour rechercher les triangles comportant des arêtes communes.

Selon un autre aspect, l'invention a pour objet un dispositif de triangulation pour un affichage numérique sur un écran d'un terminal, ce dispositif comprenant

- une unité de mémoire pour stocker une liste ordonnée de points correspondant à un polygone, ainsi qu'une liste de triangles conformes obtenue par triangulation conforme à partir de cette liste ordonnée de points,

- des moyens de réception d'un identifiant d'un point à ajouter/supprimer de la liste ordonnée de points,

- des premiers moyens de traitement pour déterminer en fonction de l'identifiant reçu et de la liste de triangles conformes, une sous-liste ordonnée de points de la liste ordonnée, cette sous-liste correspondant à une portion du polygone,

- des deuxièmes moyens de traitement pour ajouter/supprimer le point à ajouter/supprimer à/de ladite sous-liste,

- des moyens de triangulation reliés à une sortie des deuxièmes moyens de traitement, pour effectuer une triangulation conforme du polygone correspondant à ladite sous-liste, et

- des moyens de mise à jour agencés pour actualiser, en fonction des triangles conformes obtenus par les moyens de triangulation, la liste de triangles conformes stockée dans l'unité de mémoire, en vue d'un affichage des triangles de ladite liste actualisée sur l'écran.

Ce dispositif peut permettre d'implémenter le procédé décrit plus haut. Selon encore un autre aspect, l'invention a pour objet un produit programme d'ordinateur de triangulation pour l'affichage de triangles obtenus sur un écran d'un terminal, le programme d'ordinateur étant destiné à être stocké dans une mémoire d'un terminal, et/ou stocké sur un support mémoire destiné à coopérer avec un lecteur de ce terminal et/ou téléchargé via un réseau de télécommunication, caractérisé en ce qu'il comprend des instructions pour exécuter les étapes du procédé exposé ci-dessus.

D'autres caractéristiques et avantages de l'invention apparaîtront encore à la lecture de la description qui va suivre. Celle-ci est purement illustrative et doit être lue en regard des dessins annexés sur lesquels :

- La figure 1 montre un exemple de dispositif selon un mode de réalisation de l'invention.
- La figure 2 est un exemple d'organigramme d'un procédé selon un mode de réalisation de l'invention ;
- La figure 3 est un exemple d'organigramme d'un procédé selon un mode de réalisation de l'invention ;
- Les figures 4A à 4D montrent des exemples d'ajouts de point à un polygone ;
- Les figures 5A et 5B montrent un exemple d'ajout d'un point extérieur au polygone précédemment triangulé ;
- Les figures 6A à 6E montrent un exemple d'ajout d'un point intérieur au polygone précédemment triangulé.
- Les figures 7A à 7B montrent un exemple de retrait d'un point d'un polygone précédemment triangulé.

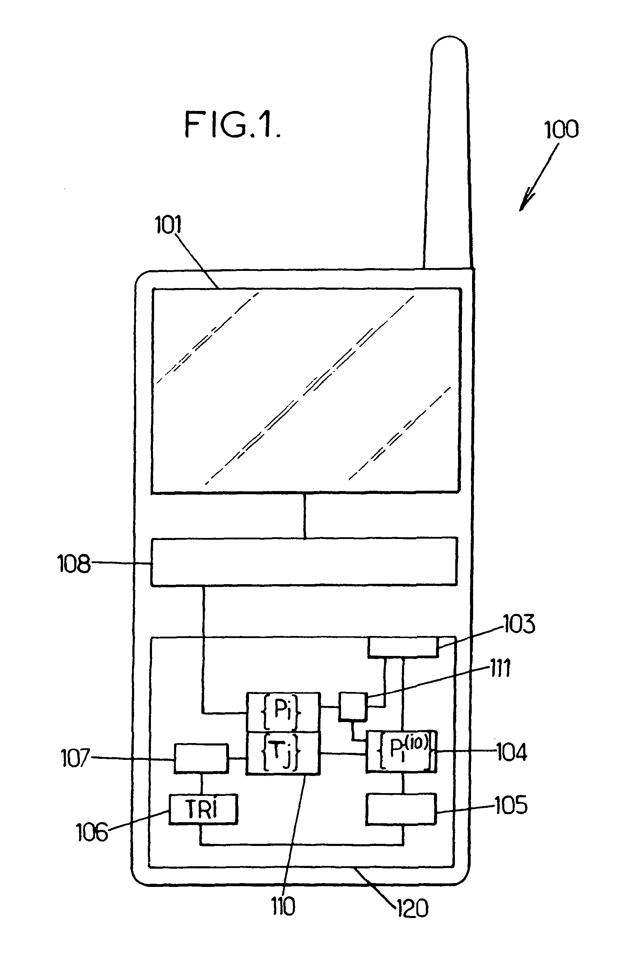

En référence à la figure 1, un terminal 100, par exemple un téléphone portable, un PDA (de l'anglais « Personal Digital Assistant »), un ordinateur portable, ou autre, comporte un écran 101, une antenne, et un dispositif de triangulation, par exemple un processeur 120.

Le processeur 120 comporte des moyens de réception 103, par exemple un port d'entrée, un pin, un bus, ou autre, pour recevoir un identifiant d'un point à ajouter ou supprimer d'une liste ordonnée de points stockée dans une unité de mémoire 110. Cet identifiant peut être reçu d'un serveur externe non représenté, via l'antenne, ou bien encore d'une mémoire interne au terminal et non représentée.

Cet identifiant peut par exemple comprendre des coordonnées spatiales d'un point et un identifiant d'ordre de ce point dans la liste ordonnée de points, par exemple une valeur d'un indice de rang ou un pointeur.

Des moyens de mise à jour 111, par exemple un processeur ou une partie de processeur, permettent d'ajouter ce point reçu à la liste de points stockée dans l'unité de mémoire 110, à un rang donné par la valeur d'indice de rang reçu.

On peut prévoir que certains des points initialement présents dans la liste, par exemple les points ayant initialement un indice supérieur à l'indice reçu voient leur indice de rang modifié lors de cette mise à jour. Alternativement, l'indice associé à chaque point a une valeur fixe, calculée en tenant compte d'un nombre maximum de points (correspondant par exemple à un niveau de détails maximal).

L'unité de mémoire 110 peut comporter une ou plusieurs mémoires accessibles en lecture et en écriture.

Cette unité de mémoire permet de stocker, outre la liste ordonnée de points, une liste de triangles conformes obtenue par une triangulation précédente de cette liste ordonnée de points. L'unité de mémoire peut être agencée de façon à stocker pour chaque triangle de la liste de triangles les identifiants des sommets de ce triangle et les identifiants des éventuels triangles voisins. L'unité de mémoire peut permettre de stocker en outre une liste de triangles d'arêtes non représentée, comportant pour chaque arête du polygone un identifiant du triangle auquel appartient cette arête.

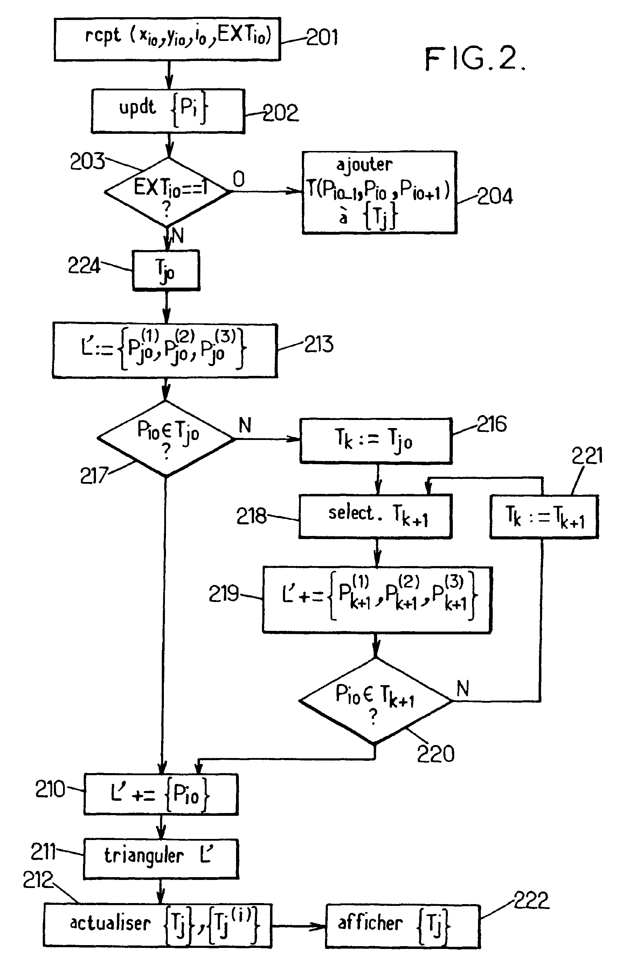

Des premiers moyens de traitement 104, par exemple un processeur ou une partie de processeur, permettent de déterminer en fonction de l'identifiant reçu et de la liste de triangles conformes, une sous-liste ordonnée de points de la liste ordonnée. Ces moyens de traitement sont agencés pour effectuer les étapes décrites en référence à la figure 2, laquelle sera explicitée plus loin.

La sous-liste ordonnée correspond à une portion du polygone correspondant à la liste de points initiale. Au sein de la sous-liste ordonnée, les points sont ordonnés selon la valeur de l'indice de rang utilisée dans la liste stockée dans l'unité de mémoire.

Des deuxièmes moyens de traitement 105, par exemple un processeur ou une partie de processeur, permettent d'ajouter le point reçu aux points de la sous-liste, au rang adéquat.

Cette sous-liste ordonnée définit ainsi un polygone, de taille moindre que le polygone correspondant aux triangles de la liste de triangles stockée dans l'unité de mémoire 110. Le polygone correspondant à la sous-liste fait l'objet d'une triangulation, indépendamment des autres points de la liste ordonnée de points stockée dans l'unité de mémoire 110. Des moyens de triangulation 106, par exemple un processeur ou une partie de processeur, sont prévus à cet effet.

Ces moyens 106 permettent d'obtenir en sortie un ou plusieurs triangles. Des moyens de mise à jour 107, par exemple un processeur ou une partie de processeur, sont prévus pour actualiser, en fonction du ou des triangle(s) conforme(s) obtenus par les moyens de triangulation 106, la liste de triangles conformes stockée dans l'unité de mémoire 110.

Cette liste stockée dans l'unité de mémoire 110 est lue par des moyens 108, par exemple une carte graphique ou un processeur dédié à l'affichage de surfaces triangulaires. Ces moyens 108 permettent d'afficher les triangles de liste de triangles sur l'écran 101.

L'identifiant reçu par les moyens de réception 103 peut comprendre un identifiant d'un point de la liste ordonnée de points stockée dans l'unité de mémoire 110. Cet identifiant peut par exemple comporter une indication de ce que le point reçu appartient à la liste stockée et un indice de rang de ce point dans cette liste.

Dans ce cas, les premiers moyens de traitement 104 déterminent le ou les triangles de la liste de triangles stockée dans l'unité de mémoire, qui ont pour sommet le point reçu. On choisit en tant que points de la sous-liste ordonnée de points tous les sommets de ces triangles. Au sein de la sous-liste ordonnée, ces points sont ordonnés selon la valeur de l'indice de rang utilisée dans la liste stockée dans l'unité de mémoire.

Les moyens 105 permettent de soustraire le point reçu de cette sous-liste. Une triangulation est ensuite effectuée par les moyens 106, à partir des points de cette sous-liste seulement.

Enfin, les moyens de mise à jour 111 permettent également d'actualiser la liste de points stockée dans la mémoire 110, en supprimant le point reçu et éventuellement en modifiant certaines valeurs d'indices de rang.

La figure 2 est un exemple d'un algorithme d'un procédé d'affichage lorsqu'un point est rajouté à un polygone déjà affiché.

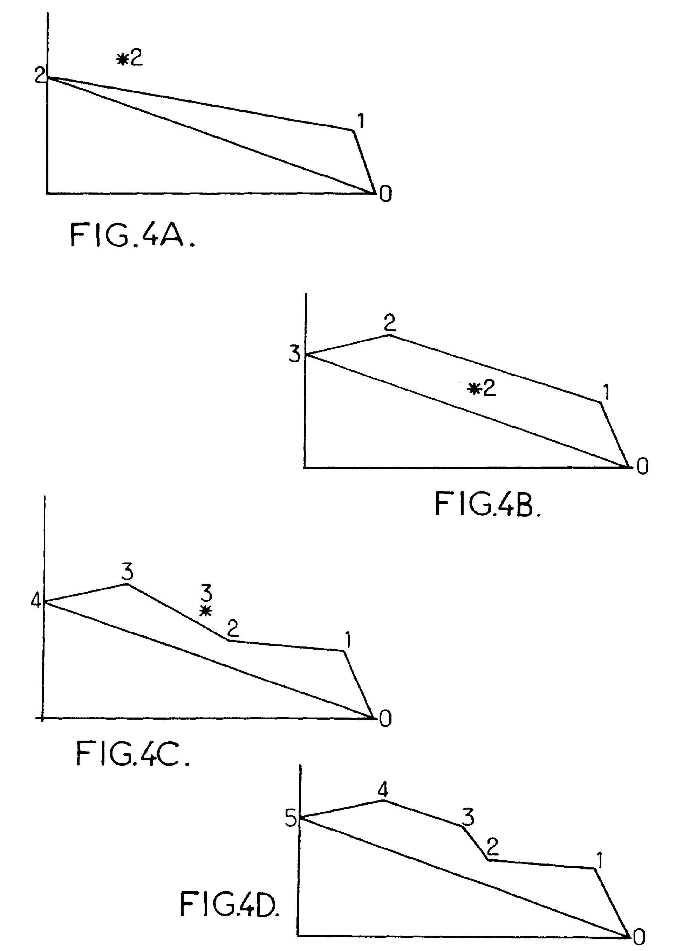

Les figures 4A à 4D montrent des exemples de rajouts de points à un polygone. Pour chacune de ces figures le polygone courant est représenté en traits plein. Sur les figures 4A à 4C est également représenté un point à rajouter, sous la forme d'une étoile, avec à coté une valeur d'indice de rang de ce point à rajouter.

Au polygone de la figure 4A, ici un simple triangle, c'est-à-dire un polygone correspondant à un niveau de détails minimum, est rajouté un point extérieur. Le chiffre, ici 2 pour la figure 4A, indique l'indice de rang du point à ajouter par rapport à la liste de points du polygone.

Après rajout de ce point, on obtient le polygone de la figure 4B.

Le polygone de la figure 4C est le polygone obtenu après rajout du point intérieur représenté par une étoile sur la figure 4B.

Le polygone de la figure 4D est le polygone obtenu après rajout du point extérieur représenté par une étoile sur la figure 4C.

Pour revenir à la figure 2, des coordonnées 2D ou 3D d'un point $P_{i0}$ à ajouter sont reçues lors d'une étape 201, avec une valeur d'indice de rang associé $i_0$, et éventuellement avec une valeur de variable binaire $EXT_{i0}$.

Cette valeur de variable binaire $EXT_{i0}$ indique si le point $P_{i0}$ à ajouter est situé à l'extérieur d'un polygone courant.

Cette valeur peut être obtenue relativement facilement lors d'une éventuelle classification d'un ensemble de points correspondant à un polygone complet par niveaux de détails, en particulier si un procédé tel que celui décrit dans la demande WO2008003687 est mis en oeuvre. Un serveur stockant l'ensemble de points par niveau de détail peut ainsi mémoriser pour chaque point cet attribut $EXT_{i0}$, lequel peut n'occuper qu'un seul bit.

La liste ordonnée de points $P_0,...P_i,...P_{iMAX}$ est mise à jour lors d'une étape 202, par insertion du point $P_{i0}$. Les indices i supérieurs ou égaux à $i_0$ sont incrémentés de 1.

Puis, lors d'une étape 203, on teste si le point reçu $P_{i0}$ est à l'extérieur ou à l'intérieur du polygone défini par la liste ordonnée avant l'actualisation de l'étape 202.

On peut à cet effet se contenter de lire la valeur $EXT_{i0}$ et la comparer à une valeur égale à 0 ou 1.

Alternativement, on peut déterminer si le point reçu $P_{i0}$ est à l'extérieur ou à l'intérieur du polygone défini par la liste ordonnée avant actualisation à partir des positions relatives de points. Par exemple, on identifie les points $P_{i0-1}$, $P_{i0+1}$ qui précèdent et suivent le point reçu $P_{i0}$ au sein de la liste de points actualisée. On détermine le sens de rotation associé à la séquence $P_{i0-1}$, $P_{i0}$, $P_{i0+1}$.

En outre, on recherche dans la liste de triangles correspondant à la triangulation précédente le triangle $T_{j0}$ ayant pour sommets les points $P_{i0-1}$, $P_{i0+1}$.

À cet effet, on utilise le fait qu'à chaque arête $A_0,...A_m,...$ du polygone, correspond un seul triangle de la liste de triangles conformes. On peut prévoir une liste supplémentaire de triangles, dite liste des triangles d'arêtes, comportant les identifiants des triangles dont une arête est commune avec une arête du polygone, cette liste étant classée par arête du polygone.

A partir des points $P_{i0-1}$, $P_{i0+1}$, on retrouve facilement l'arête $A_{j0}$ correspondante du polygone courant, et donc, en utilisant la liste des triangles d'arêtes, le triangle $T_{j0}$ correspondant à cette arête.

Ce triangle $T_{j0}$ possède un autre sommet, noté P'. On détermine le sens de rotation associé à la séquence $P_{i0-1}$, P', $P_{i0+1}$.

Si ce sens de rotation est le même que celui associé à la séquence $P_{i0-1}$, $P_{i0}$, $P_{i0+1}$, c'est à dire si les triangles $T(P_{i0-1}, P_{i0}, P_{i0+1})$ et $T_{j0}$ ont des aires de même signe, alors on considère que le point reçu $P_{i0}$ n'est pas extérieur au polygone.

Sinon, on considère que le point reçu $P_{i0}$ est extérieur au polygone.

Dans le cas d'un point à ajouter extérieur, la triangulation, est relativement simple à mener: on ajoute le triangle $P_{i0-1}P_{i0}P_{i0+1}$ à la liste des triangles, lors d'une étape 204.

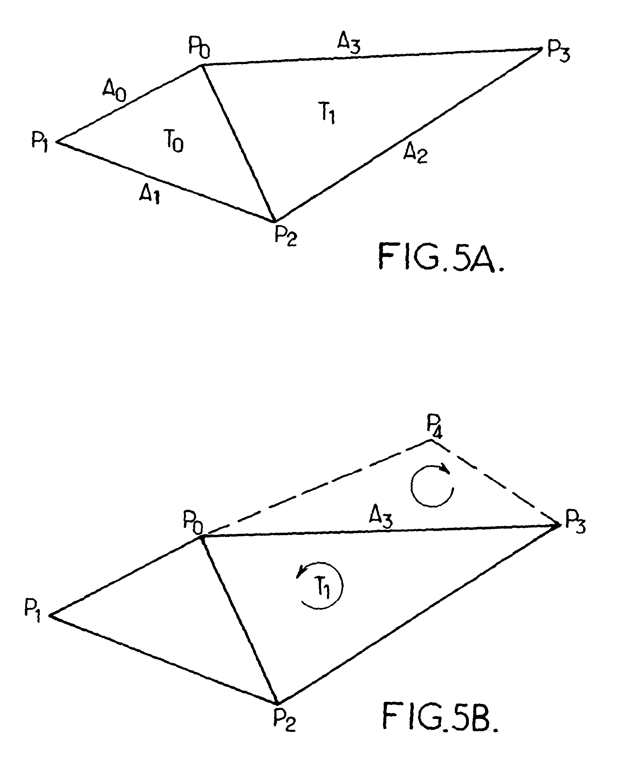

Un tel cas de figure est illustré par les figures 5A et 5B.

Le polygone initial de la figure 5A est choisi avec relativement peu de points à des fins de clarté, mais on comprendra bien que le procédé est généralisable à des polygones avec un nombre de points bien plus élevé, de l'ordre de la dizaine de milliers par exemple.

Pour un tel polygone, est par exemple stocké en mémoire :

- une liste ordonnée de points $(P_0, P_1, P_2, P_3)$;
- une liste des triangles obtenus par la triangulation précédente. Pour chaque triangle, on peut par exemple prévoit trois espaces de stockage pour respectivement trois identifiants de points (pour les sommets du triangle) et également trois espaces de stockage pour respectivement trois identifiants de triangles voisins. Les triangles sont ordonnés par convention dans le sens trigonométrique. Dans l'exemple de la figure 5A, cette liste comporte deux triangles :

$T_0$ : $(P_0, P_1, P_2)$, $(0, 0, T_1)$ puisque les arêtes $[P_0P_1]$ et $[P_1P_2]$ n'appartiennent qu'au seul triangle $T_0$, et

$T_1$ : $(P_0, P_2, P_3)$, $(T_0, 0, 0)$.

- une liste de triangles d'arête $(T_0, T_0, T_1, T_1)$ correspondant à la liste d'arêtes $(A_0, A_1, A_2, A_3)$.

En référence à la figure 5B, lorsqu'un point $P_4$ est ajouté au polygone $P_0P_1P_2P_3$, on identifie l'arête $A_3$ comme correspondant aux points $P_3$ et $P_0$ précédent et suivant le point $P_4$ dans la liste ordonnée de points réactualisée $(P_0, P_1, P_2, P_3, P_4)$.

En utilisant la liste de triangles d'arêtes, on retrouve le triangle $T_1$ correspondant à cette arête $A_3$.

Le sens de rotation associé à la séquence $P_0$, $P_2$, $P_3$, des points ordonnés du triangle $T_1$ est le sens trigonométrique. Le sens de rotation associé à la séquence $P_0$, $P_4$, $P_3$ est le sens anti-trigonométrique. Le point ajouté $P_4$ est donc considéré comme à l'extérieur du polygone $P_0P_1P_2P_3$.

On ajoute donc le triangle $P_0P_3P_4$ à la liste de triangles, et à la liste de triangles d'arêtes.

Pour revenir à la figure 2, si le point ajouté n'est pas considéré comme extérieur au polygone non-actualisé, on détermine lors d'une étape 224 le triangle $T_{j0}$ comprenant les points $P_{i0-1}$, $P_{i0+1}$. On peut à cet effet utiliser la liste ordonnée de points et la liste de triangles d'arête, permettant par là d'éviter de parcourir tous les triangles de la liste des triangles pour rechercher ce triangle $T_{j0}$ comprenant les points $P_{i0-1}$, $P_{i0-1}$.

Les points du triangle $T_{j0}$ sont sélectionnés pour faire partie d'une sous-liste ordonnée de points L', lors d'une étape 213.

Suit une étape de test 217 au cours de laquelle on détermine si le point à ajouter $P_{i0}$ est à l'intérieur du triangle $T_{j0}$. Là encore, on peut procéder par comparaisons de signes d'aires signées : on considère que le point $P_{i0}$ est à l'intérieur du triangle $T_{j0}$ si les sens de rotation associés aux séquences

- $P_{i0}$, $P_{i0-1}$, P',
- $P_{i0+1}$, $P_{i0}$, P',
- $P_{i0+1}$, $P_{i0-1}$, P'

sont les mêmes.

On rappelle que P' désigne le troisième sommet (distinct des sommets $P_{i0+1}$, $P_{i0-1}$) du triangle $T_{j0}$.

Ces étapes de test 217 peuvent conduire à considérer le point $P_{i0}$ comme à l'extérieur du triangle $T_{j0}$.

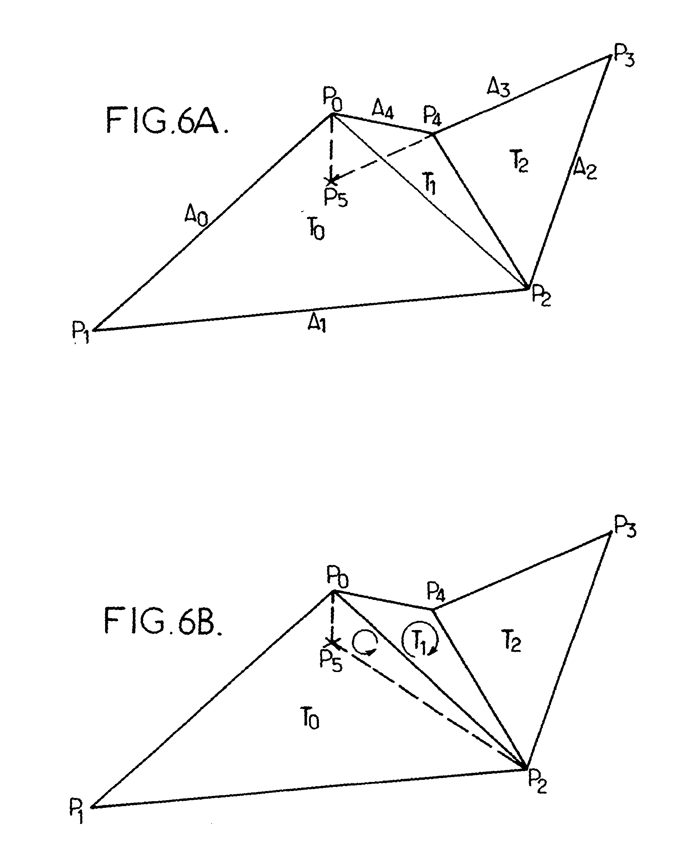

Les figures 6A à 6E illustrent un tel cas de figure : le point à ajouter $P_5$ est situé en dehors du triangle $T_1$ comprenant l'arête $A_4$.

Commence alors une recherche itérative du triangle de la liste de triangles qui inclue le point ajouté.

Le triangle $T_{j0}$, ici le triangle $T_1$, est considéré comme triangle courant lors d'une étape d'initialisation 216.

Puis on sélectionne lors d'une étape 218 le triangle voisin du triangle courant, qui partage avec ce triangle courant une arête visible depuis le point ajouté.

Pour cela on considère les triangles voisins du triangle $T_1$. Si le triangle $T_1$ est conservé dans la liste de triangles sous la forme $T_1$ : $(P_0, P_2, P_4)$, $(T_0, T_2, 0)$, il est facile de retrouver les triangles voisins $T_0$, $T_2$.

Puis, pour chacun de ces triangles voisins, on détermine en outre l'arête commune avec le triangle courant $T_1$, et ce toujours à partir des informations conservées dans la liste de triangles. A $T_0$ correspond l'arête commune $[P_0P_2]$, et à $T_2$ correspond l'arête commune $[P_2P_4]$.

Pour chacune de ces arêtes communes on détermine si cette arête est visible depuis le point ajouté, c'est-à-dire si le triangle formé par cette arête commune et le point ajouté a le même signe d'aire que le triangle courant, pour l'arête commune prise selon un même sens.

Par exemple, pour reprendre l'exemple de la figure 6A :

- à la séquence $P_5$, $P_4$, $P_2$ correspond le sens anti-trigonométrique,
- à la séquence $P_0$, $P_4$, $P_2$ correspond également le sens anti-trigonométrique.

L'arête commune $[P_2P_4]$ ne constitue donc pas une arête visible depuis le point ajouté $P_5$.

En revanche, comme illustré sur la figure 6B :

- à la séquence $P_2$, $P_0$, $P_5$ correspond le sens trigonométrique,
- à la séquence $P_2$, $P_0$, $P_4$ correspond le sens anti-trigonométrique.

L'arête $[P_0P_2]$ constitue donc une arête visible depuis le point ajouté $P_5$. On choisit donc le triangle $T_0$ lors de l'étape 218.

Lors d'une étape 219, on ajoute à la sous-liste L' les sommets du triangle sélectionné à l'étape 218, c'est-à-dire pour reprendre l'exemple des figures 6A et 6B, les points $P_0$, $P_2$, $P_1$.

On teste lors d'une étape 220 si le point à ajouter appartient au triangle voisin, en appliquant par exemple un procédé décrit en référence à l'étape 217.

Si le point à ajouter est extérieur au triangle voisin, on recommence les étapes 218, 219 et 220, après avoir choisi comme triangle courant le triangle voisin (étape 221). On recherche ainsi de proche en proche à quel triangle appartient le point à ajouter, tout en sélectionnant (étapes 219) pour la sous-liste L' les sommets des triangles ainsi parcourus.

Lorsqu'on a déterminé le triangle auquel appartient le point à ajouter, à l'issu d'un des tests 217, 220, on a obtenu une sous-liste de points de polygone qui correspond à une portion du polygone. On peut éventuellement prévoir une étape de ré-ordonnancement de la sous-liste en fonction de l'indice de rang de chaque point, au cours de laquelle seraient éliminés les doublons.

Dans cet exemple, la sous-liste de point est constituée lors des étapes 213, 219 de sélection de points. Toutefois, l'invention n'est en rien limitée par la façon dont est constituée la sous-liste de points. On peut par exemple prévoir de mémoriser des identifiants de tous les triangles déterminés lors des étapes 224, 228, puis d'établir une liste des arêtes de ces triangles qui sont extérieures au polygone, en utilisant la structure de liste de triangles stockée en mémoire. On retire les arêtes apparaissant plusieurs fois, et on peut ainsi obtenir une sous-liste de points déjà ordonnée.

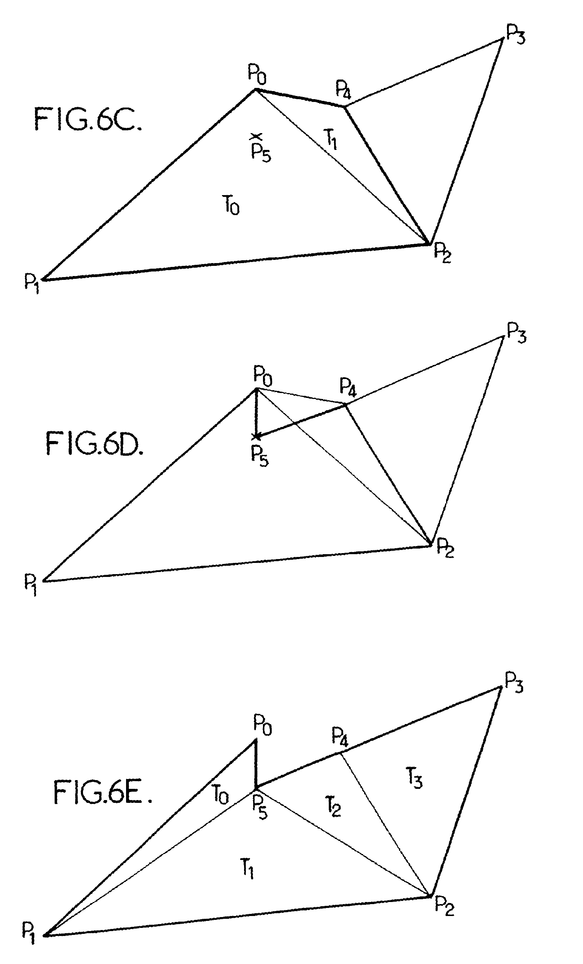

Pour revenir à l'exemple des figures 6A et 6B, la sous-liste de points comporte les sommets des triangles $T_0$ et $T_1$, et correspond à un polygone $P_0P_1P_2P_4$, ce polygone $P_0P_1P_2P_4$ correspondant à une portion du polygone $P_0P_1P_2 P_3P_4$, comme illustré par la figure 6C.

Lors d'une étape 210, on ajoute le point reçu $P_{i0}$ à la sous-liste L', en tenant compte de l'indice de rang du point $P_{i0}$. La sous-liste correspond alors à un nouveau polygone, par exemple, pour reprendre l'exemple des figures 6A à 6C, au polygone $P_0P_1P_2 P_4P_5$, comme illustré sur la figure 6D.

On effectue lors d'une étape 211 une triangulation de ce nouveau polygone, en utilisant un procédé de triangulation conforme connu de l'art antérieur. Comme représenté sur la figure 6E, les triangles obtenus ont tous pour sommet le point ajouté (triangles en FAN ou étoilés).

Puis on actualise lors d'une étape 212 la liste de triangles, et également la liste de triangles d'arêtes, en fonction des triangles obtenus lors de l'étape 211, de sorte qu'on obtient une triangulation de l'ensemble du polygone. Pour reprendre l'exemple des figures 6A à 6E, les triangles $T_0$ et $T_1$ de la liste de triangles correspondant à la triangulation précédente (figure 6A) sont remplacés par les triangles $T_0$, $T_1$ et $T_2$ (figure 6E).

Egalement, on peut prévoir d'effectuer la mise à jour de la liste ordonnée de points à ce stade du procédé.

Ces triangles peuvent être affichés sur un écran lors d'une étape 222.

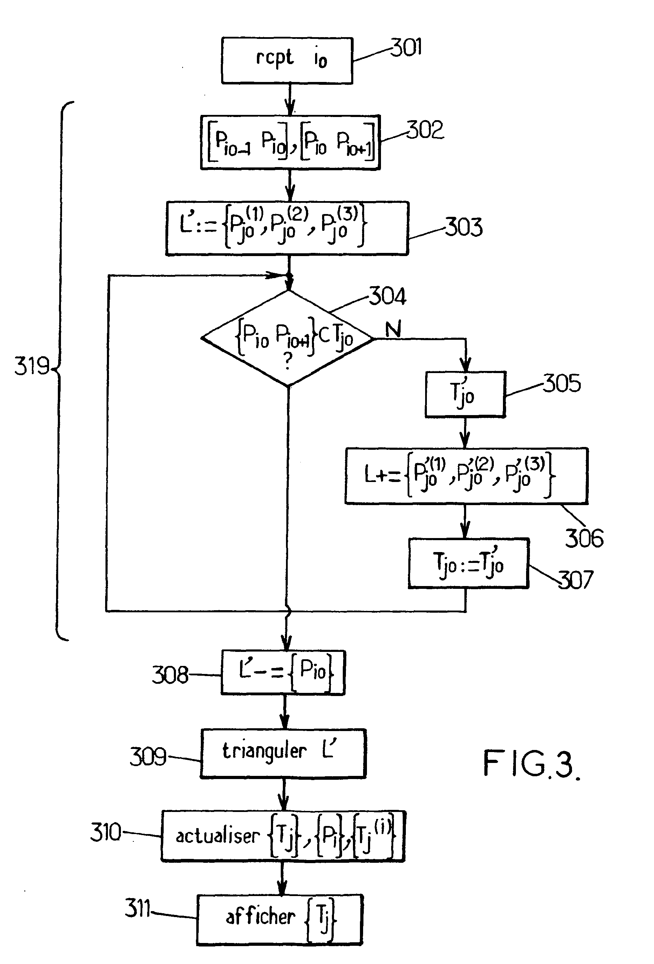

La figure 3 est un organigramme d'un exemple de procédé à exécuter en cas de retrait d'un point du polygone affiché.

On reçoit lors d'une étape 301 un indice de rang du point à supprimer. Lors d'une étape 319, on détermine tous les triangles de la liste de triangles ayant ce point pour sommet.

A cet effet, on peut déterminer lors d'une étape 302 les arêtes $[P_{i0-1}P_{i0}]$ et $[P_{i0}P_{i0+1}]$ comportant ce point.

On choisit l'une $[P_{i0-1}P_{i0}]$ des ces arêtes et on retrouve, à l'aide de la liste de triangles d'arête le triangle correspondant $T_{j0}$.

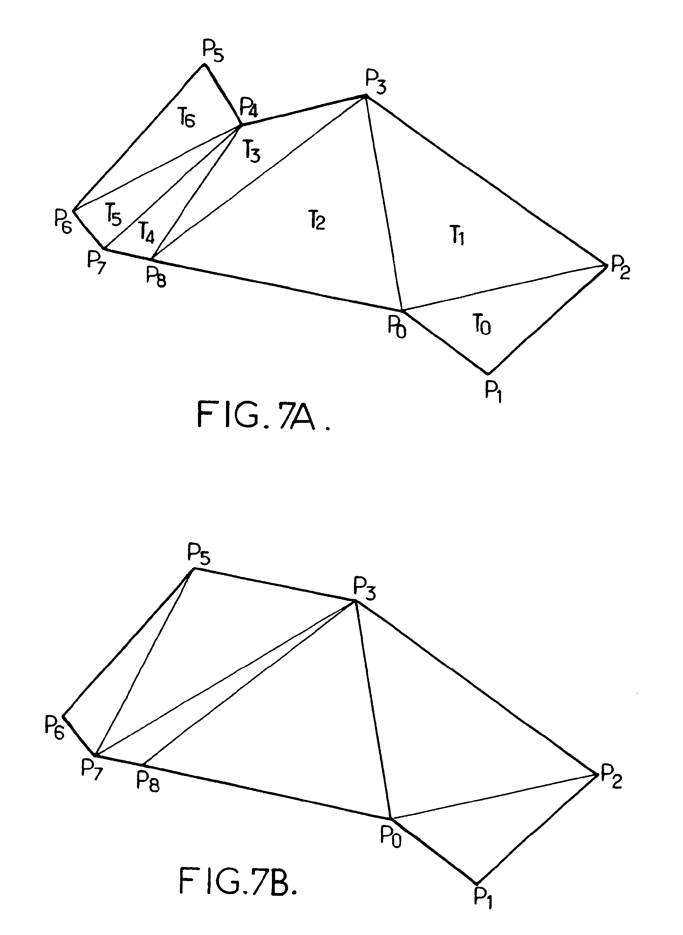

Par exemple, en référence à l'exemple du polygone triangulé de la figure 7A, $P_4$ étant le point à supprimer, le triangle ainsi retrouvé peut être le triangle $T_3$.

Les sommets de ce triangle $P_{j0}^{(1)}, P_{j0}^{(2)}, P_{j0}^{(3)}$ sont conservés en tant que points de la sous-liste L' lors d'une étape 303.

Si ce triangle $T_{j0}$ comporte aussi l'autre arête $[P_{i0}P_{i0+1}]$, on ne rajoute pas d'autres points à la sous-liste (test 304).

Si ce triangle $T_{j0}$ ne comporte pas l'autre arête $[P_{i0}P_{i0+1}]$, on sélectionne lors d'une étape 305 le triangle voisin $T'_{j0}$ de ce triangle qui comprend le point à supprimer. On peut à cet effet utiliser la structure particulière de la liste de triangles, laquelle conserve pour chaque triangle les éventuels triangles voisins.

Dans l'exemple de la figure 7A, le triangle $T_3$ a pour voisins les triangles $T_2$ et $T_4$, mais seul $T_4$ comprend le point $P_4$ à supprimer. On choisit donc le triangle $T_4$.

Les sommets de ce triangle voisin sont ajoutés à la sous-liste lors d'une étape 306.

Puis on prend le triangle voisin comme triangle courant (étape 307) et on recommence le test 304 consistant à déterminer si le triangle voisin comprend l'autre arête $[P_{i0}P_{i0+1}]$.

On peut ainsi parcourir plusieurs triangles jusqu'à obtenir le triangle voisins ayant $[P_{i0}P_{i0+1}]$ pour arête.

Dans l'exemple de la figure 7A, on parcoure ainsi les triangles $T_3$, $T_4$, $T_5$, $T_6$, de sorte que l'on sélectionne ainsi les points $P_3$, $P_4$, $P_5$, $P_6$, $P_7$, $P_8$.

L'invention n'est en rien limitée par la façon dont est constituée la sous-liste de points. On peut par exemple prévoir de mémoriser des identifiants de tous les triangles parcourus, puis d'établir une liste des arêtes de ces triangles qui sont extérieures au polygone, en utilisant la structure de liste de triangles stockée en mémoire. On retire les arêtes apparaissant plusieurs fois, et on peut ainsi obtenir une sous-liste de points déjà ordonnée. Puis le point à supprimer est supprimé de cette sous-liste (étape 308).

On effectue lors d'une étape 309 une triangulation du polygone correspondant aux points restants, par exemple $P_3P_5P_6P_7P_8$ dans le cas de la figure 7A.

Puis les différentes listes sont mises à jour lors d'une étape 310. Enfin, les triangles sont affichés lors d'une étape 311.

La figure 7B montre le polygone de la figure 7A, actualisé par la suppression du point $P_4$, et triangulé.

## Revendications

1.  Dispositif (120) de triangulation pour un affichage numérique sur un écran (101) d'un terminal (100), ledit dispositif comprenant

    - une unité de mémoire (110) pour stocker une liste ordonnée de points ($\{P_i\}$) correspondant à un polygone, ainsi qu'une liste de triangles con-

formes ({$t_j$}) obtenue par triangulation conforme à partir de ladite liste ordonnée de points,

- des moyens de réception (103) d'un identifiant d'un point à ajouter/supprimer de la liste ordonnée de points,

- des premiers moyens de traitement (104) pour déterminer en fonction de l'identifiant reçu et de la liste de triangles conformes, une sous-liste ordonnée de points de la liste ordonnée, ladite sous-liste correspondant à une portion du polygone,

- des deuxièmes moyens de traitement (105) pour ajouter/supprimer le point à ajouter/supprimer à/de ladite sous-liste,

- des moyens de triangulation (106) reliés à une sortie des deuxièmes moyens de traitement, pour effectuer une triangulation conforme du polygone correspondant à ladite sous-liste, et

- des moyens de mise à jour (107) agencés pour actualiser, en fonction des triangles conformes obtenus par les moyens de triangulation, la liste de triangles conformes stockée dans l'unité de mémoire, en vue d'un affichage des triangles de ladite liste actualisée sur l'écran.

**2.** Dispositif (102) selon la revendication 1, comprenant en outre

- des moyens de mise à jour (111) de la liste ordonnée de points stockée dans l'unité de mémoire, lesdits moyens étant agencés pour, lorsque l'identifiant du point reçu par les moyens de réception (103) comprend des coordonnées dudit point et une indication d'ordre dudit point, ajouter ledit point reçu à ladite liste ordonnée, à un rang donné par l'indication d'ordre reçue,

et dans lequel
les premiers moyens de traitement (104) sont agencés pour

- déterminer si ledit point reçu est situé à l'extérieur du polygone correspondant à la liste de triangles stockée dans l'unité de mémoire,

- le cas échéant, choisir les deux points de la liste ordonnée adjacents au point reçu en tant que points de la sous-liste,

- sinon, déterminer un jeu d'au moins un triangle de la liste de triangles stockée dans l'unité de mémoire, ledit jeu étant constitué de tous les triangles de ladite liste au moins en partie recouverts par le triangle formé par le point reçu et les deux points de la liste ordonnée adjacents audit point reçu, et choisir en tant que points de la sous-liste ordonnée les points correspondants audit jeu.

**3.** Dispositif (102) selon l'une des revendications 1 ou 2, dans lequel les premiers moyens de traitement (104) sont agencés pour, lorsque l'identifiant du point reçu par les moyens de réception (103) comprend un identifiant d'un point de la liste ordonnée de points stockée dans l'unité de mémoire (110), choisir en tant que points de la sous-liste ordonnée de points tous les points des triangles de la liste de triangles de la triangulation précédente qui ont le point reçu comme sommet,

le dispositif comportant en outre
des moyens de mise à jour (111) agencés pour supprimer ledit point reçu de la liste ordonnée de points stockée dans l'unité de mémoire.

**4.** Procédé de triangulation conforme, en vue d'un affichage numérique sur un écran d'un terminal, comprenant

a/ recevoir (201) un identifiant d'un point à ajouter/supprimer d'une liste ordonnée de points correspondant à un polygone, ledit polygone ayant fait l'objet d'une triangulation conforme précédente,

b/ déterminer (203, 224, 213, 216, 217,218, 219, 220) en fonction de l'identifiant reçu et d'une liste de triangles conformes obtenue par la triangulation précédente, une sous-liste ordonnée de points de la liste ordonnée, ladite sous-liste correspondant à une portion du polygone,

c/ ajouter/supprimer (210) le point à ajouter/supprimer à/de ladite sous-liste,

d/ effectuer une triangulation conforme (211) du polygone correspondant à la sous-liste obtenue à l'étape c/, et

e/ actualiser (204, 212) la liste de triangles conformes obtenue par la triangulation précédente, en fonction des résultats de la triangulation de l'étape d/, en vue d'un affichage sur l'écran.

**5.** Procédé selon la revendication 4, dans lequel l'identifiant du point reçu comprend des coordonnées dudit point et une indication d'ordre dudit point, le procédé comprenant

- ajouter (202) ledit point reçu à la liste ordonnée de points correspondant au polygone précédemment triangulé, à un rang donné par l'indication d'ordre reçue,

- à l'étape b/, déterminer (203) si ledit point reçu est situé à l'extérieur du polygone précédemment triangulé,

le cas échéant, à l'étape e/, ajouter (204) à la liste de triangles correspondant à la triangulation précédente le triangle formé par le point reçu ($P_{i0}$) et les deux points ($P_{i0-1}$, $P_{i0+1}$) de la liste ordonnée adjacents audit point,

sinon déterminer (224,213,217, 216,218, 219, 220) lors de l'étape b/ un jeu d'au moins un triangle de la liste de triangles correspondant à la triangulation précédente, ledit jeu étant constitué de tous les triangles de ladite liste au moins en partie recouverts par le triangle formé par le point reçu et les deux points de la liste ordonnée adjacents audit point reçu, et choisir en tant que points de la sous-liste ordonnée les points correspondants audit jeu.

6. Procédé selon la revendication 5, dans lequel on détermine (203) si le point reçu est situé à l'extérieur du polygone précédemment triangulé à partir d'une indication reçue ($EXT_{i0}$).

7. Procédé selon l'une des revendications 5 à 6, dans lequel, pour déterminer le jeu d'au moins un triangle de la liste de triangles
si le point reçu ($P_{i0}$) est dans le triangle ($T_{j0}$) de la liste de triangle comprenant les deux points ($P_{i0-1}$, $P_{i0+1}$) de la liste ordonnée adjacents audit point reçu, on choisit (213) les sommets dudit triangle en tant que points de la sous-liste de points,
sinon, on sélectionne (213) les sommets du triangle de la liste de triangles comprenant lesdits deux points de la liste ordonnée en tant que points de la sous-liste, puis pour un triangle courant ($T_k$) étant initialement (216) ledit triangle de la liste de triangles comprenant lesdits deux points de la liste ordonnée, on effectue les étapes consistant à

b1/ choisir (218) un triangle voisin ($T_{k+1}$) du triangle courant partageant avec ledit triangle courant une arête visible depuis le point reçu,
b2/ sélectionner (219) les sommets du triangle voisin en tant que points de la sous-liste,
b3/ si le point reçu est extérieur au triangle voisin, répéter les étapes b1/, b2/ et b3/ en considérant (221) le triangle voisin comme triangle courant, et ce jusqu'à trouver le triangle voisin auquel appartient le point reçu.

8. Procédé selon la revendication 4, dans lequel l'identifiant du point reçu comprend un identifiant ($i_0$) d'un point de la liste ordonnée de points correspondant au polygone précédemment triangulé, comprenant à l'étape b/, choisir (319) en tant que points de la sous-liste ordonnée de points tous les points des triangles de la liste de triangles de la triangulation précédente qui ont le point reçu comme sommet, et supprimer (310) ledit point reçu de la liste ordonnée de points.

9. Procédé selon l'une des revendications 4 à 8, dans lequel on prévoit de conserver, pour chaque arête du polygone précédemment triangulé, un identifiant du triangle comportant ladite arête.

10. Programme d'ordinateur comprenant des instructions pour mettre en oeuvre les étapes d'un procédé selon l'une des revendications 4 à 9 lors d'une exécution du programme par des moyens de traitement.

**Claims**

1. Triangulation device (120) for a digital display on a screen (101) of a terminal (100), said device comprising

- a memory unit (110) for storing an organized list of points ($\{P_i\}$) corresponding to a polygon, as well as a list of conforming triangles ($\{T_j\}$) obtained by a conforming triangulation on the basis of said organized list of points,
- means (103) for receiving an identifier of a point to be added/deleted from the organized list of points,
- first processing means (104) for determining, as a function of the identifier received and the list of conforming triangles, an organized sub-list of points from the organized list, said sub-list corresponding to a portion of the polygon,
- second processing means (105) for adding/ deleting the point to be added/deleted to/from said sub-list,
- triangulation means (106) connected to an output of the second processing means for running a conforming triangulation of the polygon corresponding to said sub-list, and
- updating means (107) configured to update the list of conforming triangles stored in the memory unit as a function of the conforming triangles obtained by the triangulation means, in view of displaying the triangles of said updated list on the screen.

2. Device (102) as claimed in claim 1, further comprising

- means (111) for updating the organized list of points stored in the memory unit, said means being configured so that, if the identifier of the point received by the receiving means (103) comprises coordinates of said point and an indication of an organization-order of said point, said point received is added to the organized list in a rank specified by the organization-order received,

and in which
the first processing means (104) are configured for

- determining whether said point received is located outside the polygon corresponding to the list of triangles stored in the memory unit,
- if so, selecting as points of the sub-list the two points in the organized list that are adjacent to the point received,

- if not, determining a set of at least one triangle from the list of triangles stored in the memory unit, said set being made up of all the triangles in said list which are at least partially overlapped by the triangle formed by the point received and the two points in the organized list adjacent to said point received, and selecting as points of the organized sub-list the points corresponding to said set.

3. Device (102) as claimed in any one of claims 1 or 2, in which

the first processing means (104) are configured for selecting as points of the organized sub-list of points all the points of the triangles of the list of triangles from the previous triangulation which have the received point as a vertex, if the identifier of the point received by the receiving means (103) comprises an identifier of a point in the ordered list of points stored in the memory unit (110),

the device further comprising

updating means (111) configured for deleting said point received from the organized list of points stored in the memory unit.

4. Conforming triangulation method for providing a digital display on a screen of a terminal, comprising

a/ receiving (201) an identifier of a point to be added/deleted from an organized list of points corresponding to a polygon, said polygon having been subjected to a previous conforming triangulation,

b/ determining (203, 224, 213, 216, 217, 218, 219, 220), as a function of the received identifier and a list of conforming triangles obtained by the preceding triangulation, an organized sub-list of points from the organized list, said sub-list corresponding to a portion of the polygon,

c/ adding/deleting (210) the point to be added/deleted to/from said sub-list,

d/ running a conforming triangulation (211) of the polygon corresponding to the sub-list obtained in step c/, and

e/ updating (204, 212) the list of conforming triangles obtained by the preceding triangulation as a function of the results of the triangulation in step d/ in view of displaying on the screen.

5. Method as claimed in claim 4, in which the identifier of the point received comprises coordinates of said point and an indication of the organization-order of said point, and the method comprises

- adding (202) said point received to the organized list of points corresponding to the previously triangulated polygon in a rank specified by the organization-order received,

- in step b/, determining (203) whether said point received is located outside the previously triangulated polygon,

- if so, in step e/, adding (204) to the list of triangles corresponding to the previous triangulation the triangle formed by the point received ($P_{i0}$) and the two points ($P_{i0-1}$, $P_{i0+1}$) of the organized list adjacent to said point,

if not, determining (224, 213, 217, 216, 218, 219, 220), in step b/, a set of at least one triangle in the list of triangles corresponding to the previous triangulation, said set being made up of all the triangles in said list at least partially overlapped by the triangle formed by the point received and the two points in the organized list adjacent to said point received, and selecting as points in the organized sub-list the points corresponding to said set.

6. Method as claimed in claim 5, in which it is determined (203) whether the point received is located outside the previously triangulated polygon on the basis of an indication received ($EXT_{i0}$).

7. Method as claimed in one of claims 5 to 6, in which, in order to determine the set of at least one triangle from the list of triangles,

if the point received ($P_{i0}$) is in the triangle ($T_{j0}$) in the list of triangles containing the two points ($P_{i0-1}$, $P_{i0+1}$) in the organized list adjacent to said point received, the vertices of said triangle are selected (213) as points in the sub-list of points,

if not, the vertices of the triangle in the list of triangles containing said two points are selected (213) from the organized list as points of the sub-list, and then, the following steps are run for a current triangle ($T_k$) which is initially (216) said triangle in the list of triangles containing said two points of the organized list, comprising

b1/ choosing (218) a neighbouring triangle ($T_{k+1}$) of the current triangle sharing with said current triangle an edge visible from the received point,

b2/ selecting (219) as points of the sub-list the vertices of the neighbouring triangle,

b3/ if the point received is outside the neighbouring triangle, repeating steps b1/, b2/ and b3/ taking (221) the neighbouring triangle as the current triangle and doing so until the neighbouring triangle to which the point received belongs is found.

8. Method as claimed in claim 4, in which the identifier of the point received comprises an identifier ($i_0$) of a point in the organized list of points corresponding to the previously triangulated polygon, comprising in step b/, choosing (319) as points of the organized sub-list of points all the points of the triangles in the list of triangles from the previous triangulation which contain the point received as a vertex, and deleting (310) said point received from the organized list of points.

9. Method as claimed in one of claims 4 to 8, in which provision is made to retain for each edge of the previously triangulated polygon an identifier of the triangle containing said edge.

10. Computer program containing instructions for implementing the steps of a method as claimed in one of claims 4 to 9 when the program is run by processing means.

**Patentansprüche**

1. Triangulationsvorrichtung (120) für eine numerische Anzeige auf einem Bildschirm (101) eines Endgeräts (100), wobei die Vorrichtung umfasst:

- eine Speichereinheit (110) zum Speichern einer geordneten Liste von Punkten ({P;}), welche einem Polygon entspricht, und einer Liste von konformen Dreiecken ({T$_j$}), welche durch konforme Triangulation ausgehend von der geordneten Liste von Punkten erhalten wurde,
- Mittel zum Empfangen (103) einer Kennung eines zu der geordneten Liste von Punkten hinzuzufügenden/ von dieser zu löschenden Punktes,
- erste Behandlungsmittel (104) zum Bestimmen einer geordneten Unterliste von Punkten von der geordneten Liste in Abhängigkeit von der empfangenen Kennung und von der Liste konformer Dreiecke, wobei die Unterliste einem Bereich des Polygons entspricht,
- zweite Behandlungsmittel (105) zum Hinzufügen/Löschen des zu der Unterliste hinzuzufügenden/ von dieser zu löschenden Punktes,
- Mittel zur Triangulation (106), welche mit einem Ausgang der zweiten Behandlungsmittel verbunden sind, um eine konforme Triangulation des der Unterliste entsprechenden Polygons zu erreichen, und
- Aktualisierungsmittel (107), welche dazu eingerichtet sind, in Abhängigkeit von den durch die Triangulationsmittel erhaltenen konformen Dreiecken die in der Speichereinheit gespeicherte Liste konformer Dreiecke in Hinblick auf eine Anzeige der Dreiecke der aktualisierten Liste auf dem Bildschirm zu aktualisieren.

2. Vorrichtung (102) nach Anspruch 1, ferner umfassend

- Mittel zur Aktualisierung (111) der in der Speichereinheit gespeicherten geordneten Liste von Punkten, wobei die Mittel dazu eingerichtet sind, dann, wenn die von den Empfangsmitteln (103) empfangene Kennung des Punktes Koordinaten des Punkts und eine Ordnungsangabe des Punktes umfasst, den empfangenen Punkt zu der geordneten Liste mit einem durch die empfangene Ordnungsangabe gegebenen Rang hinzuzufügen, und wobei

die ersten Behandlungsmittel (104) dazu eingerichtet sind,

- zu bestimmen, ob sich der empfangene Punkt außerhalb des Polygons befindet, welches der in der Speichereinheit gespeicherten Liste von Dreiecken entspricht,
- gegebenenfalls die beiden Punkte der geordneten Liste, welche dem empfangenen Punkt benachbart sind, als Punkte der Unterliste auszuwählen,
- anderenfalls einen Satz aus wenigstens einem Dreieck der in der Speichereinheit gespeicherten Liste von Dreiecken zu bestimmen, wobei der Satz aus allen Dreiecken der Liste gebildet ist, welche wenigstens teilweise von dem durch den empfangenen Punkt und die beiden dem empfangenen Punkt benachbarten Punkte der geordneten Liste gebildeten Dreieck bedeckt sind, und die dem Satz entsprechenden Punkte als Punkte der geordneten Unterliste auszuwählen.

3. Vorrichtung (102) nach einem der Ansprüche 1 oder 2, wobei

- die ersten Behandlungsmittel (104) dazu eingerichtet sind, dann, wenn die von den Empfangsmitteln (103) empfangene Kennung des Punktes eine Kennung eines Punktes der in der Speichereinheit (110) gespeicherten geordneten Liste von Punkten umfasst, als Punkte der geordneten Unterliste von Punkten alle Punkte der Dreiecke der Liste von Dreiecken der vorhergehenden Triangulation auszuwählen, welche den empfangenen Punkt als Spitze aufweisen,

wobei die Vorrichtung ferner umfasst:

- Mittel zur Aktualisierung (111), welche dazu eingerichtet sind, den empfangenen Punkt von der in der Speichereinheit gespeicherten geordneten Liste von Punkten zu löschen.

4. Verfahren zur konformen Triangulation in Hinblick auf eine numerische Anzeige auf einem Bildschirm eines Endgeräts, umfassend

a) Empfangen (201) einer Kennung eines Punkts, welcher zu einer einem Polygon entsprechenden geordneten Liste von Punkten hinzuzufügen/ von dieser zu löschen ist, wobei das Polygon Gegenstand einer vorhergehenden konformen Triangulation war,
b) Bestimmen (203, 224, 213, 216, 217, 218, 219, 220) einer geordneten Unterliste von Punkten von der geordneten Liste in Abhängigkeit von der empfangenen Kennung und einer Liste von konformen, durch die vorhergehende Triangulation erhaltenen Dreiecken, wobei die Unterliste einem Bereich des Polygons entspricht,
c) Hinzufügen/Löschen (210) des zu der Unterliste hinzuzufügenden/ von dieser zu löschenden Punktes,
d) Ausführen einer konformen Triangulation (211) des Polygons, welches der in Schritt c) erhaltenen Unterliste entspricht, und
e) Aktualisieren (204, 212) der durch die vorhergehende Triangulation erhaltenen Liste von konformen Dreiecken in Abhängigkeit der Ergebnisse der Triangulation in Schritt d) in Hinblick auf eine Anzeige auf dem Bildschirm.

5. Verfahren nach Anspruch 4, wobei die Kennung des empfangenen Punkts Koordinaten des Punktes und eine Ordnungsangabe des Punktes umfasst, wobei das Verfahren umfasst:

- Hinzufügen (202) des empfangenen Punktes zu der dem zuvor triangulierten Polygon entsprechenden geordneten Liste von Punkten mit einem Rang, welcher durch die empfangene Ordnungsangabe gegeben ist,
- in Schritt b) Bestimmen (203), ob sich der empfangene Punkt außerhalb des zuvor triangulierten Polygons befindet,
- gegebenenfalls in Schritt e) Hinzufügen (204) des durch den empfangenen Punkt ($P_{i0}$) und die beiden dem Punkt benachbarten Punkte ($P_{i0-1}$, $P_{i0+1}$) der geordneten Liste gebildeten Dreiecks zu der Liste von Dreiecken, welche der vorherigen Triangulation entspricht,
- anderenfalls in Schritt b) Bestimmen (224, 213, 217, 216, 218, 219, 220) eines Satzes aus wenigstens einem Dreieck von der der vorherigen Triangulation entsprechenden Liste von Dreiecken, wobei der Satz durch alle Dreiecke der Liste gebildet wird, welche wenigstens teilweise von dem durch den empfangenen Punkt und die beiden dem empfangenen Punkt benachbarten Punkte der geordneten Liste gebildeten Dreieck bedeckt sind, und Auswählen der dem Satz entsprechenden Punkte als Punkte der geordneten Unterliste.

6. Verfahren nach Anspruch 5, wobei bestimmt (203) wird, ob sich der empfangene Punkt außerhalb des zuvor triangulierten Polygons befindet ausgehend von einer empfangenen Angabe ($EXT_{i0}$).

7. Verfahren nach einem der Ansprüche 5 oder 6, wobei zum Bestimmen des Satzes wenigstens eines Dreiecks der Liste von Dreiecken

- dann, wenn sich der empfangene Punkt ($P_{i0}$) in dem Dreieck ($T_{j0}$) der Liste von Dreiecken befindet, welches die beiden dem empfangenen Punkt benachbarten Punkte ($P_{i0-1}$, $P_{i0+1}$) der geordneten Liste umfasst, die Spitzen des Dreiecks als Punkte der Unterliste von Punkten ausgewählt werden,
- andererfalls die Spitzen des Dreiecks der Liste von Dreiecken, welches die beiden Punkte der geordneten Liste umfasst, als Punkte der Unterliste ausgewählt (213) werden, wobei dann für ein aktuelles Dreieck ($T_k$), welches anfänglich (216) das Dreieck der Liste von Dreiekken ist, welches die beiden Punkte der geordneten Liste umfasst, die folgenden Schritte ausgeführt werden:

b1) Wählen (218) eines dem aktuellen Dreieck benachbarten Dreiecks ($T_{k+1}$), welches mit dem aktuellen Dreieck eine von dem empfangenen Punkt aus sichtbare Kante teilt,
b2) Auswählen (219) der Spitzen des benachbarten Dreiecks als Punkte der Unterliste,
b3) wenn sich der empfangene Punkt außerhalb des benachbarten Dreiecks befindet, Wiederholen der Schritte b1), b2) und b3), wobei das benachbarte Dreieck als aktuelles Dreieck betrachtet (221) wird, und dies bis das benachbarte Dreieck gefunden wird, zu welchem der empfangene Punkt gehört.

8. Verfahren nach Anspruch 4, wobei die Kennung des empfangenen Punkts eine Kennung ($i_0$) eines Punkts der geordneten Liste von Punkten umfasst, welche dem zuvor triangulierten Polygon entspricht, umfassend

- in Schritt b) Wählen (319) aller Punkte der Dreiecke der Liste von Dreiecken der vorhergehenden Triangulation, welche den empfangenen Punkt als Spitze aufweisen, als Punkte der geordneten Unterliste von Punkten, und
- Löschen (310) des empfangenen Punkts von der geordneten Liste von Punkten.

9. Verfahren nach einem der Ansprüche 4 bis 8, wobei vorgesehen ist, für jede Kante des zuvor triangulierten Polygons eine Kennung des die Kante umfassenden Dreiecks zu bewahren.

10. Computerprogramm, umfassend Anweisungen zum Umsetzen der Schritte eines Verfahrens nach einem der Ansprüche 4 bis 9 bei einem Ausführen des Programms durch Behandlungsmittel.

FIG.1.

FIG.2.

rcpt $i_0$ — 301

$\left[P_{i_0-1} \; P_{i_0}\right], \left[P_{i_0} \; P_{i_0+1}\right]$ — 302

$L' := \left\{P_{j_0}^{(1)}, P_{j_0}^{(2)}, P_{j_0}^{(3)}\right\}$ — 303

319

304

$\left\{P_{i_0} \; P_{i_0+1}\right\} \subset T_{j_0}$ ? — N

$T'_{j_0}$ — 305

$L += \left\{P_{j_0}'^{(1)}, P_{j_0}'^{(2)}, P_{j_0}'^{(3)}\right\}$ — 306

$T_{j_0} := T'_{j_0}$ — 307

308 — $L' -= \left\{P_{i_0}\right\}$

309 — trianguler $L'$

310 — actualiser $\left\{T_j\right\}, \left\{P_i\right\}, T_j^{(i)}$

311 — afficher $\left\{T_j\right\}$

FIG.3.

FIG.4A.

FIG.4B.

FIG.4C.

FIG.4D.

FIG.5A.

FIG.5B.

FIG.6A.

FIG.6B.

FIG.6C.

FIG.6D.

FIG.6E.

FIG.7A.

FIG.7B.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

• WO 2008003687 A

**Littérature non-brevet citée dans la description**

• **Kumars.** Robust incremental polygon triangulation for surface rendering. *WSCG,* 2000, vol. 2, 381-388